# EUROPÄISCHE PATENTSCHRIFT

(11) **EP 2 353 958 B1**
(45) Veröffentlichungstag und Bekanntmachung des Hinweises auf die Patenterteilung: **25.02.2015**
(21) Anmeldenummer: 10015761.9
(22) Anmeldetag: 17.12.2010
(51) Int. Cl.: B60W 40/02, G06K 9/00, B60W 30/08

(54) **Verfahren zur Auswertung von die Umgebung eines Kraftfahrzeugs betreffenden Sensordaten wenigstens eines Umfeldsensors und Kraftfahrzeug**
Method for evaluating sensor data of the surroundings of a motor vehicle from at least one environment sensor and motor vehicle
Procédé d'évaluation de données de capteur concernant l'environnement d'un véhicule automobile d'au moins un capteur d'environnement et véhicule automobile

(30) Priorität: 23.01.2010 DE 102010005501
(43) Veröffentlichungstag der Anmeldung: 10.08.2011
(73) Patentinhaber: Audi AG, 85045 Ingolstadt (DE)
(72) Erfinder: Hofmann, Ulrich, Dr., 85049 Ingolstadt (DE); Bouzouraa, Mohamed Essayed, 85049 Ingolstadt (DE)
(74) Vertreter: Thielmann, Frank

(56) Entgegenhaltungen:
- DE-A1-102005 055 347
- DE-A1-102006 058 308
- MIRKO MEUTER ET AL: "A novel approach to lane detection and tracking", INTELLIGENT TRANSPORTATION SYSTEMS, 2009. ITSC '09. 12TH INTERNATIONAL IEEE CONFERENCE ON, IEEE, PISCATAWAY, NJ, USA, 4. Oktober 2009 (2009-10-04), Seiten 1-6, XP031560119, ISBN: 978-1-4244-5519-5
- MUHAMMAD ASIF ET AL: "An Implementation of Active Contour and Kalman Filter for Road Tracking", IAENG INTERNATIONAL JOURNAL OF APPLIED MATHEMATICS, Bd. 37, Nr. 2, 17. November 2007 (2007-11-17), XP055020616,
- J.C. MCCALL ET AL: "Video-Based Lane Estimation and Tracking for Driver Assistance: Survey, System, and Evaluation", IEEE TRANSACTIONS ON INTELLIGENT TRANSPORTATION SYSTEMS, Bd. 7, Nr. 1, 1. März 2006 (2006-03-01), Seiten 20-37, XP055020721, ISSN: 1524-9050, DOI: 10.1109/TITS.2006.869595

## Beschreibung

Die Erfindung betrifft ein Verfahren zur Auswertung von die Umgebung eines Kraftfahrzeugs betreffenden Sensordaten wenigstens eines Umfeldsensors sowie ein zugehöriges Kraftfahrzeug.

Viele Klassen von aktuellen Fahrerassistenzsystemen benötigen Informationen über Objekte in der Umgebung des Ego-Fahrzeugs, beispielsweise, um die Längs- und/oder Querführung des Ego-Fahrzeugs gezielt zu steuern oder entsprechende Hinweise an einen Fahrer zu generieren. Beispiele für solche Fahrerassistenzsysteme sind beispielsweise Abstandsregelsysteme (z. B. automatic cruise control), Querführungssysteme oder Einparkassistenten. Dafür haben die Steuergerät dieser Fahrerassistenzsysteme Zugriff auf einen oder mehrere Umfeldsensoren, die Sensordaten liefern, aus denen die Position und weitere Eigenschaften von Umfeldobjekten geschlussfolgert werden können. Wichtig für die eigentlichen Funktionen der Fahrerassistenzsysteme ist dabei häufig auch die Position eines Umfeldobjekts oder sonstigen Umfeldmerkmals.

Es sind zwei hauptsächliche Ansätze zur Umfeldwahrnehmung und deren Repräsentation mittels Umfeldsensorik bekannt. In einem ersten Ansatz wird der Schwerpunkt auf die Schätzung der Dynamik und Form von Objekten mittels Parametermodellen bestimmter Objektklassen gelegt. Die Umfeldwahrnehmung, also letztlich die Auswertung, beruht dabei meistens auf sensorbasierter Detektion und modellbasierter Verfolgung und Schätzung von Hindernisobjekten. Mittels dieser modellgestützten Verfolgung wird die Berücksichtigung der Sensorunsicherheit und das Überbrücken von kurzen Ausfällen der Messungen, beispielsweise durch Verdeckung, ermöglicht.

Der zweite bekannte Ansatz legt seinen Schwerpunkt auf eine gitterbasierte Repräsentation stationärer, unstrukturierter Hindernisse unter Erhaltung des Nachbarschaftsbezugs und eine explizite Beschreibung der freien und unbekannten Räume. Jede Zelle des Belegungsgitters hat dabei in der Regel eine vordefinierte Zellengröße und enthält eine Wahrscheinlichkeit, dass dort ein Hindernis ist oder dass sie frei ist.

Beide Ansätze weisen jedoch gravierende Nachteile auf. So ermöglicht die modellbasierte Detektion und Verfolgung von Hindernissen nur die Gewinnung von Informationen über Objekte in der Umgebung. Informationen über Freiräume und nicht beobachtete Gebiete im Umfeld des Kraftfahrzeugs werden nicht berücksichtigt. Solche Informationen sind jedoch sehr wichtig für ein konsistentes Umfeldmodell und für hochautomatisierte Fahrerassistenzsysteme. Denn der Umkehrschluss, dass dort, wo gemäß dem Modell keine Objekte vorliegen, auch wirklich Hindernisfreiheit vorliegt, ist nicht allgemein gültig.

Der Nachteil der gitterbasierten Ansätze mit fester Zellengröße ist das Erfordernis einer hohen Rechenleistung, die bei den gängigen Steuergeräten nicht vorhanden ist. Zudem ist der Informationsgehalt in einem derartigen Belegungsgitter wenig konkret, so dass eine weitere Extraktion der Informationen notwendig ist.

DE 10 2005 005 347 A1 betrifft ein Fahrassistenzsystem, welches zwei Umfeldsensoren aufweist, deren Erfassungsbereiche wenigstens teilweise überlappen. Aus den Daten der Umfeldsensoren sollen aus in Spalten und in Zeilen angeordneten Bildpunkten bestehende Bilder des Fahrzeugumfeldes abgeleitet werden, wobei den Zeilen der Bilder Entfernungswerte zugeordnet werden. So soll die Bestimmung der Entfernung eines erfassten Objekts aus seiner relativen Zeilenlage in dem Bild möglich sein.

In DE 10 2006 058 308 A1 sind ein Verfahren und eine Vorrichtung zum Erfassen eines Hindernisses in einem Umgebungsbereich eines Kraftfahrzeugs beschrieben, worin in einem Gittermodell der Umgebungsbereich in eine Mehrzahl von Feldern aufgeteilt ist, wobei für jedes Feld eine Wahrscheinlichkeit als Maß für das Vorhandensein eines Hindernisses ermittelt wird. Der Erfindung liegt daher die Aufgabe zugrunde, ein Verfahren anzugeben, mit dem eine effiziente, wenig rechenaufwendige Repräsentation von Umfeldmerkmalen unter Berücksichtigung und Wiedergabe aller relevanten Informationen möglich ist.

Zur Lösung dieses Problems ist bei einem Verfahren zur Auswertung von die Umgebung eines Kraftfahrzeugs betreffenden Sensordaten wenigstens eines Umfeldsensors erfindungsgemäß vorgesehen, dass zur Beschreibung der Position eines im Rahmen der Auswertung ermittelten Umfeldmerkmals dieses einem von mehreren in Längsrichtung des Kraftfahrzeugs aufeinanderfolgenden Streifen gemeinsam mit wenigstens einer kontinuierlichen Angabe zu seiner Querposition innerhalb des Streifens senkrecht zur Längsrichtung des Kraftfahrzeugs in der Fahrbahnebene zugeordnet wird.

Erfindungsgemäß wird also vorgeschlagen, eine gitterartige Quantisierung bei der Informationsaufzeichnung in Längsrichtung des Kraftfahrzeugs (die meist der Fahrtrichtung entspricht) vorzunehmen, während die Querposition innerhalb des Streifens kontinuierlich angegeben wird. Eine derartige Repräsentation kann also als eine effiziente Gitterdarstellung mit in Längsrichtung des Kraftfahrzeugs diskretisierten Streifenpositionen aufgefasst werden. Da letztlich keine Gitterzellen in Querrichtung betrachtet werden müssen, ist diese Repräsentation weitaus effizienter. Diese Effizienz äußert sich insbesondere in einer geringeren benötigten Speicherbelegung, folglich auch einer geringeren Belastung von Kommunikationsleitungen, beispielsweise eines Fahrzeugbusses. Auch der Rechenaufwand wird geringer.

Zudem wird das Eintragen, Aktualisieren und Extrahieren von Umfeldmerkmalen im Vergleich zu der starren gitterbasierten Darstellung einfacher, weil die neuen Umfeldmerkmale wesentlich kompakter eingetragen und ausgelesen werden können. Gleichzeitig bleibt jedoch der Nachbarschaftsbezug der Umfeldmerkmale - der große Vorteil der Gitterkarte mit fester Zellengröße - erhalten. Auf diese Weise können die Vorteile einer Gitterkarte mit fester Zellengröße kosten- und rechenzeiteffizient nachgebildet werden. Das erfindungsgemäße Verfahren ist deshalb bei begrenzter Rechenleistung auf Steuergeräten umsetzbar.

Weitere Vorteile des erfindungsgemäßen Verfahrens ergeben sich auch bei der weiteren konkreten Auswertung der Sensordaten im Hinblick auf Funktionen von Fahrerassistenzsystemen. Denn beispielsweise ist es für die Interpretation von Verkehrsszenarien häufig notwendig, Umfeldobjekt-Repräsentationen aufzubauen, um zusätzliche abgeleitete Informationen, beispielsweise Beziehungen zwischen Umfeldobjekten oder Manöverintentionen von Umfeldobjekten zu akkumulieren und/oder zu bewerten. Der dafür benötigte Benzug ist durch die gleichzeitige Beschreibung der Umfeldmerkmale innerhalb der jeweiligen Streifen vorteilhafterweise bereits vorhanden.

Die Anzahl der Streifen, ihre Ausdehnung in Fahrzeuglängsrichtung oder ihre (falls vorgesehen) Ausdehnung in Fahrzeugquerrichtung sollten der jeweiligen Anwendung entsprechend gewählt werden. Beispielsweise können 50 Streifen mit einer Ausdehnung von 1 Meter in Längsrichtung des Kraftfahrzeugs verwendet werden, wobei sich eine größere Anzahl der Streifen vor dem Kraftfahrzeug als hinter dem Kraftfahrzeug befinden sollte.

Wie bereits erwähnt, ist eine Begrenzung der Breite der Streifen aufgrund der kontinuierlich angegebenen Querposition grundsätzlich nicht notwendig, kann jedoch, um ein klar definiertes abgedecktes Gebiet zu verwenden, dennoch festgelegt werden. In einer solchen Ausgestaltung ist es zweckmäßig, wenn die Position der Streifen senkrecht zur Längsrichtung des Kraftfahrzeugs abhängig von einer prädizierten Trajektorie des Kraftfahrzeugs, insbesondere von dem zukünftigen Fahrbahnverlauf, gewählt wird. Der Fahrbahnverlauf kann dabei aus einem Navigationssystem, aber auch aus Daten der Umfeldsensoren selber bestimmt werden, gegebenenfalls sogar ohnehin durch Umfeldmerkmale beschrieben werden, worauf im Folgenden noch näher eingegangen werden wird.

Zweckmäßig ist es ferner allgemein, wenn alle Streifen eine gleiche Größe, insbesondere eine gleiche Ausdehnung in Längsrichtung des Kraftfahrzeugs, aufweisen. Die Ausdehnung in Fahrzeuglängsrichtung kann dabei grundsätzlich konstant sein. Es sind jedoch auch Ausführungsformen denkbar, bei denen die Ausdehnung der Streifen in Längsrichtung des Kraftfahrzeugs abhängig vom Fahrzustand des Kraftfahrzeugs variiert wird. Beispielsweise ist eine Skalierung in Abhängigkeit der Fahrzeuggeschwindigkeit denkbar, wobei dann allerdings immer eine Umrechnung auf die neu zu definierenden Streifen erforderlich ist.

In besonders vorteilhafter weiterer Ausbildung des Verfahrens kann vorgesehen sein, dass bei einer Fortbewegung des Kraftfahrzeugs um die Ausdehnung eines Streifens in Fahrtrichtung der entgegen der Fahrtrichtung entfernteste Streifen aus der Betrachtung entfernt wird und in Fahrtrichtung ein Streifen ergänzt wird. Dabei ist vorzugsweise zudem vorgesehen, dass bei Entfernung und Ergänzung eines Streifens alle anderen Streifen um eine Position entgegen der Fahrtrichtung relativ zum Kraftfahrzeug verschoben werden. Eine solche Ausgestaltung ist eine ortsfeste Repräsentation von Umfeldmerkmalen entlang zur Längsachse des Kraftfahrzeugs orthogonal verlaufender Streifen. "Ortsfest" ist in diesem Zusammenhang so zu verstehen, dass die Positionen der zum Kraftfahrzeug relativen Umfeldmerkmale entsprechend der Eigenbewegung des Kraftfahrzeugs so kompensiert werden, dass sie gegenüber dem Boden stationär sind bzw. sich entsprechend ihrer Eigendynamik bewegen. Man kann sich also vorstellen, dass sich das Kraftfahrzeug über eine abgerollte Kette entlang des vom Kraftfahrzeug befahrenen Fahrweges bewegt. Durch die Verschiebung der Streifen relativ zum Kraftfahrzeug bleiben bezüglich der Fahrbahn stationäre Umfeldmerkmale vorteilhafterweise unverändert, da ihre Relativbewegung zu dem Kraftfahrzeug durch diese Verschiebung bereits kompensiert wird. Andere Umfeldmerkmale, die eine Eigenbewegung aufweisen, werden aktualisiert, worauf im Folgenden noch näher eingegangen werden soll. Auf diese Weise können die Streifen als ortsfest gegenüber der Fahrbahn aufgefasst werden; das Kraftfahrzeug fährt also bildlich gesprochen letztlich über die Streifen, welche nach Art einer Kette behandelt werden.

Dabei kann im Übrigen vorgesehen sein, dass Ego-Daten einer im Kraftfahrzeug vorgesehenen Inertialsensorik zur Ermittlung der Eigenbewegung des Kraftfahrzeugs ausgewertet werden, welche dann als Grundlage zur Kompensation von Bewegungen der Umfeldmerkmale dienen. Entsprechende Sensoriken, über die die Eigenbewegung des Kraftfahrzeugs bestimmt werden kann, sind weithin bekannt und müssen hier nicht näher diskutiert werden.

In bevorzugter weiterer Ausgestaltung werden die Umfeldmerkmale durch wenigstens einen Teil der Positionsbeschreibung enthaltende Datencontainer beschrieben. Prinzipiell sind im erfindungsgemäßen Verfahren zwei Arten von Datenstrukturen denkbar. Zum einen können die Streifen selbst eine Datenstruktur sein, die Datencontainer, die Umfeldmerkmale beschreiben, enthalten. Dann muss in den Datencontainern folglich nur die Position innerhalb des Streifens, insbesondere also die Querposition, gespeichert werden. Denkbar ist auch, jedoch weniger bevorzugt, eine Liste aller ungeordneten Datencontainer vorzuhalten, in denen dann auch eine Identifikation des Streifens enthalten ist.

Werden genauere Positionsinformationen benötigt, so kann vorgesehen sein, dass die Datencontainer neben der Querposition auch eine Längsposition in Längsrichtung des Kraftfahrzeugs innerhalb des Streifens enthalten, insbesondere als Abweichung von der Streifenmitte. Ein solcher optionaler Positionswert, die Längsposition, kann also insbesondere einen Wertebereich aufweisen, der durch [-0,5 x Streifendicke; + 0,5 x Streifendicke] beschrieben werden kann.

Vorzugsweise wird wenigstens ein Datencontainer vom Typ Punktzelle verwendet, in dem die Querposition einem bestimmten Punkt innerhalb des Streifens entspricht, und/oder wenigstens ein Datencontainer vom Typ Intervallzelle, in dem die Querposition durch eine linke und eine rechte Begrenzung eines Intervalls beschrieben wird. Über Punktzellen - die folglich keinerlei Ausdehnung besitzen - können beispielsweise punktartige Umgebungsmerkmale verfolgt werden, insbesondere Trajektorien von Bewegungsobjekten, prädizierte Positionen bzw. Fahrtwege und dergleichen. Solche durch Punktzellen beschriebenen Trajektorien können beispielsweise im Rahmen einer weiteren Auswertung für die Funktion eines Fahrerassistenzsystems weiter ausgewertet werden, was aufgrund der einfachen Repräsentation effizient möglich ist. Die Daten einer Punktzelle können beispielsweise Zustandsattribute der Szenerie (Kolonnenfahrt von Fahrzeugen, Durchschnittsgeschwindigkeiten der Fahrspuren, Fahrmanövertrajektorien oder erwartete prädizierte Positionen von dynamischen Objekten) sein.

Ein weiterer möglicher Typ eines Datencontainers ist eine Intervallzelle, die eine linke und eine rechte Position aufweist, die ein Intervall beschreiben, das durch das beschriebenen Umgebungsmerkmal belegt ist. Vorteilhafterweise kann eine eine Belegungswahrscheinlichkeit und/oder eine Belegungsklasse, insbesondere gewählt aus der Gruppe "Belegtraum", "Freiraum", "Unbekanntraum" und "Konfliktraum", und/oder eine Dynamikklasse, insbesondere gewählt aus der Gruppe "stationär" und "dynamisch", umfassende Intervallzelle verwendet werden. Auch eine Kombination der Dynamikklasse und der Belegungsklasse sind denkbar. Im Allgemeinen können die Daten einer Intervallzelle also Umgebungsobjekte beschreiben, aber sie können auch räumliche Bereiche sein. Ein Belegtraum ist dabei ein Intervall, welches mit einer sehr hohen Wahrscheinlichkeit ein Umgebungsobjekt enthält. In einem Freiraum existiert nur eine sehr niedrige Wahrscheinlichkeit, dass ein Umgebungsobjekt dort vorhanden ist. Unbekannträume sind als Intervalle zu verstehen, für die keinerlei Sensordaten vorliegen, beispielsweise, weil sie außerhalb des Erfassungsbereichs von Umfeldsensoren liegen oder sie durch ein Umgebungsobjekt abgedeckt sind. Schließlich ist auch noch eine Klassifizierung als Konfliktraum denkbar. Ein Konflikt liegt insbesondere dann vor, wenn widersprüchliche Informationen vorliegen. Wurde beispielsweise, worauf im Folgenden noch näher eingegangen werden wird, berechnet, dass ein Intervall frei sein müsste, die Sensordaten sagen jedoch aus, dass das Intervall belegt ist, so liegt ein Konflikt vor. Ein ähnlicher Fall tritt bei widersprechenden Daten zweier Sensoren auf. Durch Auswertung des Auftretens solcher Konfliktbereiche kann insbesondere auch festgestellt werden, ob beispielsweise eine Fehlkalibrierung bzw. Verstellung eines Umfeldsensors vorliegt. Eine Belegungswahrscheinlichkeit kann insbesondere bei der Verwendung von Prädiktor-Korrektor-Verfahren vorteilhaft verwendet werden.

Zweckmäßigerweise können die Datencontainer den Positionen zugeordnete, ebenso unter Berücksichtigung der Umfelddaten ermittelte Varianzwerte umfassen, die mögliche Abweichungen der Positionen beschreiben. Die Varianzwerte ergeben sich aus Messunsicherheiten und/oder Schätzunsicherheiten und/oder Berechnungsunsicherheiten. Sie geben also letztlich an, wie genau die Positionen ermittelt sind.

Mit besonderem Vorteil können die Datencontainer noch wenigstens ein weiteres, das Umfeldmerkmal beschreibendes Datenfeld enthalten, insbesondere die Art des Umfeldmerkmals, eine Klasse des Umfeldmerkmals, die Geschwindigkeit des Umfeldmerkmals und/oder eine erwartete prädizierte Eigenschaft, insbesondere Position, des Umfeldmerkmals. Letztlich können beliebige zusätzliche Informationen in dem Datencontainer untergebracht werden, um alle notwendigen Informationen abzudecken, die letztlich durch eine Funktion eines Fahrerassistenzsystems benötigt werden.

Bezüglich der Auswertung der Sensordaten und ihrer Aufbereitung als Umfeldmerkmale existieren verschiedene Möglichkeiten. So ist es denkbar, aus den Sensordaten im Rahmen der Auswertung abstraktere Umfeldmerkmale zu bilden, beispielsweise Zuordnungen zu konkreten Objekten, denen dann auch weitere Datenfelder zugeordnet werden können. Denkbar ist es jedoch auch, die Sensordaten als Einzelmessdaten in den jeweiligen Zellen zu akkumulieren. In diesem Fall existiert also keine genauere konkrete Zuordnung, sondern letztlich hauptsächlich Belegungswahrscheinlichkeiten bzw. Belegungsklassen. Selbstverständlich sind auch Kombinationen solcher Auswertungsmechanismen möglich.

Wie bereits erwähnt, kann im erfindungsgemäßen Verfahren mit besonderem Vorteil ein Prädiktor-Korrektor-Verfahren zur Abschätzung der Position und/oder eines weiteren Datenfelds, insbesondere einer Belegungswahrscheinlichkeit, verwendet werden. Prädiktor-Korrektor-Verfahren sind im Stand der Technik weithin bekannt und müssen hier nicht näher dargelegt werden. Konkret kann vorgesehen sein, dass zur Abschätzung einer neuen Position eines Umfeldmerkmals nach der Aufnahme neuer Sensordaten zunächst ermittelt wird, wie sich das Objekt aufgrund der bekannten, insbesondere in weiteren Datenfeldern enthaltenen Informationen im Zeitintervall seit der letzten Positionsabschätzung bewegt haben würde, wonach ein Abgleich mit den neuen Sensordaten erfolgt. Dabei wird meistens ein Schätzer verwendet, der zunächst prädiziert, wie sich ein bewegtes Umgebungsmerkmal, insbesondere ein Umgebungsobjekt aufgrund der bereits bekannten Daten bewegt haben würde. Bereits hierdurch können Belegungswahrscheinlichkeiten ermittelt und/oder modifiziert werden. Dann erfolgt der Abgleich mit den Sensordaten, wodurch die Belegungswahrscheinlichkeit steigen kann, wenn diese die Voraussage bestätigen, aber auch fallen kann, wenn diese die Voraussage nicht bestätigen. Dabei ist zu beachten, dass auch eine Messung meist eine gewisse Unsicherheit aufweist. Gerade die Verwendung von solchen Prädiktor-Korrektor-Verfahren ist äußerst hilfreich, wenn es um Intervallzellen geht, die einer Belegungsklasse zugeordnet werden sollen. Es können dann Grenzbelegungswahrscheinlichkeiten und/oder weitere Bedingungen angegeben werden, nach denen ein Umgebungsmerkmal, das als Intervallzelle beschrieben ist, einer Belegungsklasse zugeordnet wird. So ist es insbesondere möglich, auch für die gesamte Streifenbreite eine Aussage darüber zu erhalten, ob es sich um einen Freiraum, einen Belegtraum, einen Unbekanntraum oder einen Konfliktraum handelt.

Es sei an dieser Stelle noch angemerkt, dass als Zeitschritt für eine Aktualisierung der Umgebungsmerkmale beispielsweise das Zeitintervall verwendet werden kann, in dem neue Messdaten vorliegen. Selbstverständlich sind jedoch auch andere Zeitschritte möglich. Über die Zeit werden dann zunehmend Prädiktionsdaten und damit abgeglichene Sensordaten zu Belegungswahrscheinlichkeiten akkumuliert, die ein genaues Abbild der Umgebung in einer einfache Repräsentation erlauben.

Allgemein kann, wie bereits erwähnt, vorgesehen sein, dass über wenigstens ein Umfeldmerkmal, insbesondere über wenigstens eine Punktzelle, eine Trajektorie eines Umfeldobjekts betrachtet wird. Solche Trajektorien können für verschiedenen Auswertungsmechanismen verwendet werden, beispielsweise auch für die Prädiktion und dergleichen. Beispielsweise kann aus den Punktzellen, die eine Trajektorie bilden, geschlussfolgert werden, ob ein in der Umgebung des Kraftfahrzeugs vorhandenes anderes Kraftfahrzeug gerade einen Spurwechsel durchführt oder dergleichen. Verschiedenste Anwendungen sind hier denkbar.

In bevorzugter weiterer Ausgestaltung kann die Positionsbeschreibung im Steuerbetrieb wenigstens eines Fahrerassistenzsystems genutzt werden und/oder über einen Fahrzeugbus, insbesondere einen CAN-Bus oder einen FIexRay-Bus, an wenigstens ein Fahrzeugsystem, insbesondere wenigstens ein Fahrerassistenzsystem, übermittelt werden. Über die anhand der Positionsbeschreibung in Form der Angabe eines Streifens und einer Querposition definierte einfache Repräsentation, konkret die Datencontainer, ist eine einfache Datenschnittstelle geschaffen, auf die sowohl Funktionen des Steuergeräts, in dem das Verfahren ausgeführt wird, als auch über einen Fahrzeugbus andere Funktionen zugreifen können. Die kompakte Umfeldrepräsentation definiert also unmittelbar auch die Datenschnittstelle zu anderen Steuergeräten, so dass die Information unmittelbar von deren Funktion genutzt werden kann, wenn die Daten, welche zudem nur wenig Übertragungsbandbreite benötigen, über einen Fahrzeugbus übertragen werden, beispielsweise an ein weiteres Fahrerassistenzsystem. Grundsätzlich ist es natürlich auch denkbar, ein Steuergerät bereitzustellen, das allein für die Aufbereitung der Daten in der hier beschriebenen kompakten Umfeldrepräsentation dient. Ein solches zentrales Steuergerät verteilt die Daten dann über einen Fahrzeugbus weiter an andere Steuergeräte, die die Informationen benötigen.

Unter Berücksichtigung der hier definierten Positionsbeschreibung, die ja einen Teil der Auswertung der Sensordaten darstellt, können dann schließlich, je nach Funktion, auch verschiedene Aktoren im Kraftfahrzeug angesteuert werden.

Neben dem Verfahren betrifft die Erfindung auch ein Kraftfahrzeug, umfassend eine zur Ermittlung der Eigenbewegung des Kraftfahrzeugs ausgebildete Inertialsensorik, wenigstens einen Umfeldsensor und ein zur Auswertung der Sensordaten des Umfeldsensors ausgebildetes Steuergerät, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen.

Das Kraftfahrzeug umfasst also einen oder mehrere Umfeldsensoren, die mit dem Steuergerät vernetzt sind. Diese Umfeldsensoren sind an kalibrierten Positionen im Kraftfahrzeug verbaut. Ferner besitzt das Kraftfahrzeug eine Intertialsensorik, bzw. Beschleunigungssensoren und dergleichen, zur Bestimmung der Eigenbewegung des Kraftfahrzeugs. Die Umfeldsensoren messen dabei Positionen und Bewegungsinformationen von realen Umfeldobjekten. Die dabei entstehenden Sensordaten werden durch das Steuergerät gesammelt und synchronisiert. Dabei können, wie bereits erwähnt, aus den Sensordaten entweder abstraktere Umfeldmerkmale gebildet werden oder die Sensordaten als Einzelmessdaten akkumuliert werden. Zur Beschreibung der Position von Umfeldmerkmalen, die nicht unbedingt nur Umfeldobjekten entsprechen müssen, sondern auch andere, abgeleitete Umfeldmerkmale sein können, nutzt das Steuergerät das erfindungsgemäße Verfahren, wonach zur Beschreibung der Position eines Umfeldmerkmals dieses einem von mehreren in Längsrichtung des Kraftfahrzeugs aufeinanderfolgenden Streifen gemeinsam mit wenigstens einer Angabe zu seiner Querposition innerhalb des Streifens senkrecht zur Längsrichtung des Kraftfahrzeugs in der Fahrbahnebene zugeordnet wird.

Das Steuergerät kann im Übrigen ferner dazu ausgebildet sein, die Positionsbeschreibung, insbesondere entsprechende Datencontainer mit weiteren Informationen, über einen im Kraftfahrzeug vorgesehenen Fahrzeugbus, insbesondere einen CAN-Bus und/oder einen FlexRay-Bus, an weitere Steuergeräte zu übertragen, insbesondere Steuergeräte eines Fahrerassistenzsystems. Die Funktionen eines solchen Fahrerassistenzsystems generieren aus den Informationen der Datencontainer beispielsweise entsprechend einer festgelegten Fahrerassistenzfunktion ein Verhalten des Kraftfahrzeugs durch entsprechende Ansteuerung von Aktoren (Lenkung, Bremse, Motor, Ausgabemittel).

Somit können insgesamt mit dem erfindungsgemäßen Kraftfahrzeug auch die beschriebenen erfindungsgemäßen Vorteile erreicht werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: eine beispielhafte Verkehrssituation (Szenerie), in der sich das Kraftfahrzeug befindet, und
- Fig. 3: eine Prinzipskizze zur Erläuterung des erfindungsgemäßen Verfahrens.

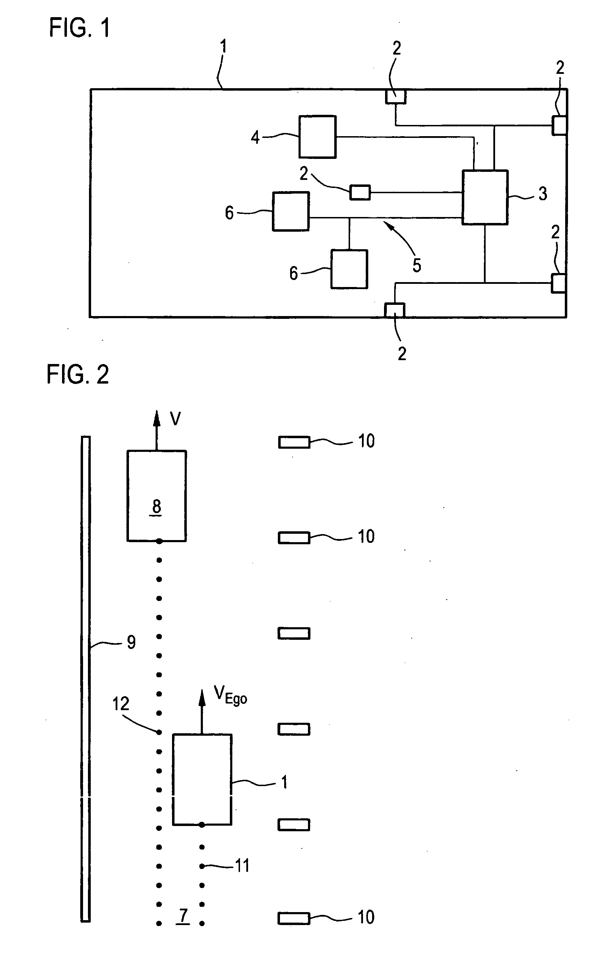

Fig. 1 zeigt ein erfindungsgemäßes Kraftfahrzeug 1. Es umfasst eine Mehrzahl von Umfeldsensoren 2, von denen einige hier beispielhaft dargestellt sind, wobei selbstverständlich noch weitere Umfeldsensoren 2 vorhanden sein können. Die Umfeldsensoren 2 sind an kalibrierten Positionen im Kraftfahrzeug 1 verbaut. Als Umfeldsensoren 2 können beispielsweise Radarsensoren, Lidarsensoren, Kameras und dergleichen vorgesehen sein.

Die Umfeldsensoren 2 sind mit einem Steuergerät 3 vernetzt, das deren Sensordaten auslesen kann. Das Steuergerät 3 kann dabei ein Steuergerät eines Fahrerassistenzsystems sein, es kann jedoch ein dediziert zur Auswertung der Sensordaten der Umfeldsensoren 2 ausgebildetes Steuergerät 3 realisiert werden. Das Steuergerät 3 ist zur Durchführung des erfindungsgemäßen Verfahrens ausgebildet, was im Folgenden noch näher erläutert werden wird.

Das Kraftfahrzeug 1 verfügt ferner noch über eine bei 4 angedeutete Inertialsensorik, wobei das Steuergerät 3 aus den Sensordaten der Inertialsensorik 4 die Eigenbewegung des Kraftfahrzeugs 1 ermitteln kann.

Schließlich ist das Steuergerät 3 noch über einen Fahrzeugbus 5, hier einen CAN-Bus, mit weiteren Steuergeräten 6 verbunden.

Konkret wertet das Steuergerät 3 die Sensordaten der Umfeldsensoren 2, unter Berücksichtigung der Sensordaten der Inertialsensorik 4, so aus, dass diese schließlich als Datencontainer vorliegen, die gegebenenfalls von dem Steuergerät 3 und den Steuergeräten 6 benötigt werden.

Konkret wird im vorliegenden Fall eine im weiteren noch näher erläuterte Datenstruktur verwendet, wobei die Umgebung des Kraftfahrzeugs 1 durch eine bestimmte Anzahl von in Längsrichtung des Kraftfahrzeugs 1 aufeinanderfolgenden, quer verlaufenden Streifen einer bestimmten, festen Ausdehnung in Längsrichtung des Kraftfahrzeugs 1 beschrieben wird. Diesen Streifen können nun Datencontainer zugeordnet werden, wobei jeder dieser Datencontainer letztlich ein Umfeldmerkmal beschreibt. Dafür enthalten die Datencontainer im vorliegenden Ausführungsbeispiel zusätzlich eine Querposition des Umfeldmerkmals innerhalb des Streifens, so dass durch die Zuordnung eines Datencontainers zu einem Streifen und die Querposition eine kompakte Positionsbeschreibung (Repräsentation) gegeben ist.

Es sei an dieser Stelle angemerkt, dass ein Datencontainer selbstverständlich noch eine Vielzahl anderer Datenfelder aufweisen kann, je nachdem, welche Informationen letztlich benötigt werden. Beispielsweise kann darin die Art des Umfeldobjekts, eine Geschwindigkeit, und eine Vielzahl mehr zusätzlich enthalten sein. Insbesondere kann jedoch vorgesehen sein, dass auch eine Längsposition entlang der Längsrichtung des Kraftfahrzeugs 1 innerhalb des Streifens als zusätzliche Information in einem Datencontainer gespeichert wird. Diese wird im vorliegenden Beispiel, falls vorgesehen, ausgehend von der Mitte des Streifens angegeben.

Weiterhin sind den Positionswerten, also der Querposition und gegebenenfalls der Längsposition, jeweils Varianzwerte zugeordnet, die die Verlässlichkeit bzw. Genauigkeit der Werte beschreiben.

Die beschriebene kompakte Umfeldrepräsentation, also die Positionsbeschreibung, definiert zugleich die Schnittstelle, über die Funktionen der Steuergeräte 3, 6, insbesondere von Fahrerassistenzsystemen, auf die soweit ausgewerteten Sensordaten zugreifen können.

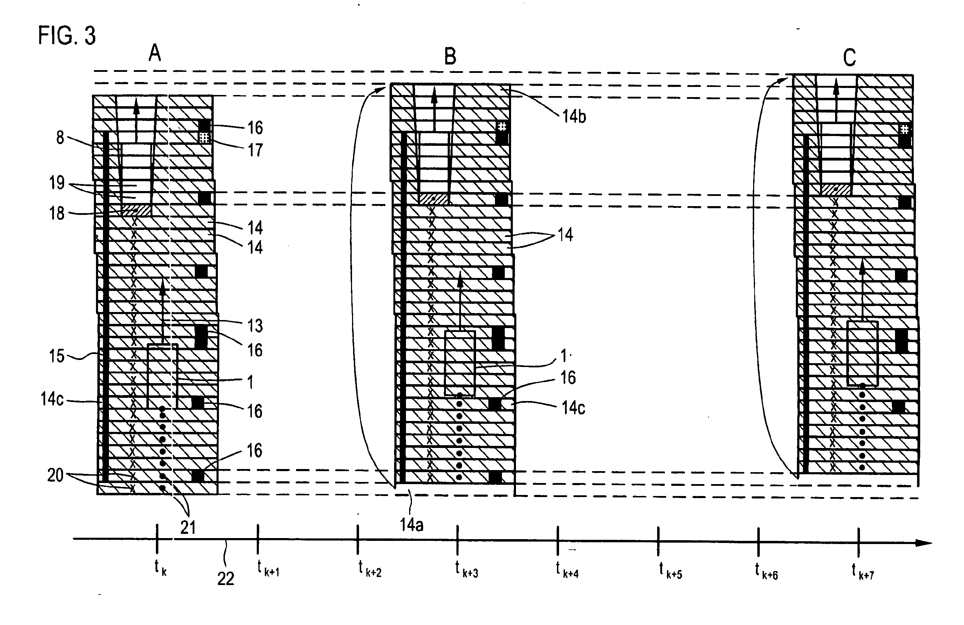

In dem konkreten Ausführungsbeispiel, welches mit Bezug auf die Fig. 2 und 3 nun näher erläutert wird, werden zwei Typen von Datencontainern verwendet. In einer Punktzelle entspricht die Querposition einem bestimmten Punkt innerhalb des Streifens. In einer Intervallzelle wird die Querposition durch eine linke und eine rechte Begrenzung eines Intervalls beschrieben.

Fig. 2 zeigt eine Szenerie zu einem Zeitpunkt tₖ, in der sich das Kraftfahrzeug 1 befindet. Diese Verkehrssituation soll zur Erläuterung des erfindungsgemäßen Verfahrens genutzt werden.

Das Kraftfahrzeug 1 fährt mit einer Geschwindigkeit v_{ego} auf einer Fahrbahn 7. Ihm voraus fährt ein weiteres Kraftfahrzeug 8 mit einer Geschwindigkeit v. Als weitere Umfeldobjekte sind eine Leitplanke 9 sowie Baken 10 zu erkennen. Weiter in Fig. 2 eingezeichnet sind die bisherigen Trajektorien 11 des Kraftfahrzeugs 1 und 12 des weiteren Kraftfahrzeugs 8. Teilbild A der Fig. 3 zeigt, wie die Verkehrssituation aus Fig. 2 in das im Rahmen des erfindungsgemäßen Verfahrens verwendete Streifenmodell abgebildet wird. Angedeutet dargestellt sind zur Erläuterung weiterhin das Ego-Kraftfahrzeug 1 und das weitere Kraftfahrzeug 8.

Die Umgebung des Kraftfahrzeugs 1 ist ersichtlich in eine Vielzahl von gleichgroßen, in Längsrichtung 13 des Kraftfahrzeugs aufeinanderfolgende, sich in Querrichtung erstreckende Streifen 14 aufgeteilt. Den Streifen 14 sind nun verschiedene Datencontainer, also Intervallzellen und Punktzellen, zugeordnet, die auch in Fig. 3 angedeutet sind. Punktzellen werden in Fig. 3 durch ein den entsprechenden Punkt markierendes Kreuz dargestellt, Intervallzellen durch eine bestimmte Schraffur des durch sie bezeichneten Intervalls im Streifen 14, wobei die Art der Schraffur hier gemäß einem weiteren Datenfeld der Intervallzelle gewählt ist, nämlich eine Belegungsklasse. Dabei deutet die nach links ansteigende Schraffur einen Freiraum an, das bedeutet, durch Auswertung der Sensordaten wurde festgestellt, dass in diesem Bereich kein Hindernis vorhanden ist. Eine gepunktete Schraffur zeigt einen Konfliktraum an. Ein Konflikt liegt dann vor, wenn widersprüchliche Daten gegeben sind, beispielsweise unterschiedliche Umfeldsensoren 2 unterschiedliche Daten über die Belegung des Intervalls wiedergeben oder eine starke Abweichung einer prädizierten Belegungswahrscheinlichkeit beim Abgleich mit den Sensordaten festgestellt wird, worauf später bezüglich des Prädiktor-Korrektor-Verfahrens nochmals eingegangen wird. Ein Bereich ohne Schraffur markiert einen Unbekanntraum, also Intervalle, in denen überhaupt keine Daten vorliegen, folglich keinerlei Aussage über die Belegung durch ein Hindernis getroffen werden kann. Ein dynamischer Belegtraum wird durch eine nach rechts ansteigende Schraffur dargestellt und ergibt sich, wenn ein bewegtes Umfeldobjekt aufgefunden wurde, welches also selbst eine Geschwindigkeit gegenüber der Fahrbahn 7 aufweist. Schließlich existieren noch stationäre Belegträume, also Intervalle mit einem Hindernis, welches bezüglich der Fahrbahn 7 stationär ist. Diese sind durch die vollständig ausgefüllten Bereiche dargestellt.

Im Teil A der Fig. 3, der der Szenerie der Fig. 2 entspricht, erkennt man nun zunächst, dass die Leitplanke 9 in den entsprechenden Streifen 14 als Intervallzelle 15 der Belegungsklasse stationärer Belegtraum repräsentiert ist. Dies gilt auch für die Baken 10, die als stationäre belegte Intervallzellen 16 in den entsprechenden Streifen abgebildet sind, gegebenenfalls sogar in zwei Streifen 14, wenn ein Teil der Bake 10 in beiden Streifen 14 liegt. Allein bei der obersten Bake 10 ist neben einer stationären belegten Intervallzelle 16 auch eine Konfliktzelle 17 zu erkennen. Grund hierfür kann ein leicht verstellter Umfeldsensor 2 sein, sodass widersprüchliche Daten von den Sensoren dort vorliegen. Durch systematische Analyse des Auftretens solcher Konfliktzellen 17 kann eine solche Verstellung im Rahmen der Auswertung auch festgestellt und gegebenenfalls, falls es sich um kalibrierbare Umfeldsensoren 2 handelt, auch korrigiert werden. Selbstverständlich können jedoch auch andere Gründe für das Auftreten von Konflikten vorliegen.

Weiterhin erkennt man in Fig. 3A eine Intervallzelle 18 der Klasse dynamischer Belegtraum. Diese entspricht dem weiteren Kraftfahrzeug 8. Ersichtlich treten in Fahrtrichtung hinter der Intervallzelle 18 in den Streifen 14 mehrere Intervallzellen 19 auf, die als Unbekanntraum markiert sind. Diese entstehen dadurch, dass das weitere Kraftfahrzeug 8 diese Bereiche verdeckt, sodass eine Messung nicht möglich ist. Auch diese Information lässt sich folglich in dem Streifenmodell abbilden.

Schließlich sind in Fig. 3A noch Punktzellen 20 und 21 zu erkennen. Die Punktzellen 20 dienen dabei der Nachverfolgung der Trajektorie 12 des zweiten Kraftfahrzeugs 8, die Punkte 21 der Nachverfolgung der Trajektorie 11 des eigenen Kraftfahrzeugs 1. Diese Trajektorien können beispielsweise in der weiteren Auswertung näher analysiert werden, beispielsweise bezüglich Spurwechselvorgängen und dergleichen. Sie können aber auch unmittelbar im Rahmen des erfindungsgemäßen Verfahrens analysiert werden, beispielsweise, wenn es um die Voraussage (Prädiktion) der Weiterbewegung des Kraftfahrzeugs 8 geht.

An dieser Stelle sei im Übrigen angemerkt, dass Punktzellen auch andere Zustandsattribute der Szenerie wiedergeben können, beispielsweise die Durchschnittsgeschwindigkeit der Fahrspuren oder auch erwartete prädizierte Positionen von dynamischen Objekten.

Es sei an dieser Stelle angemerkt, dass im erfindungsgemäßen Verfahren verschiedene Umfeldmerkmalausprägungen auch als Informationsschichten interpretiert werden können. Denn im erfindungsgemäßen Verfahren ist es auf besonders einfache Art und Weise möglich, bestimmte Umfeldmerkmale gezielt zu betrachten, indem beispielsweise die entsprechenden Datenfelder ausgewertet werden. Beispielsweise kann die Betrachtung auf die verschiedenen Schraffuren in Fig. 3, die jeweils als eine Informationsschicht aufgefasst werden können, reduziert werden, wenn beispielsweise nur dynamische Umfeldobjekte betrachtet werden sollen. Auch andere Arten von Schichten sind denkbar, wenn beispielsweise nur die Zellen betrachtet werden, die prädizierten Trajektorien von dynamischen Objekten entsprechen oder dergleichen.

In Fig. 3 ist ferner ein Zeitstrahl 22 zu sehen. Dieser enthält verschiedene äquidistante Zeitpunkte tᵢ, die jeweils das Eintreffen neuer Sensordaten markieren. Zu jedem dieser Zeitpunkte tᵢ wird ein aus dem Stand der Technik bekanntes Prädiktor-Korrektor-Verfahren eingesetzt, was beispielhaft im Folgenden kurz beschrieben werden soll.

Liegen neue Sensordaten der Umfeldsensoren 2 vor, beispielsweise zum Zeitpunkt tₖ₊₁, so werden zunächst prädizierte Positionen der dynamischen Umfeldobjekte bestimmt. Jede Intervallzelle enthält im vorliegenden Beispiel eine Belegungswahrscheinlichkeit, die letztlich angibt, wie wahrscheinlich es ist, dass das Umfeldobjekt tatsächlich in dieser Intervallzelle vorhanden ist. Danach erfolgt ein Abgleich mit den aufgenommenen Sensordaten, was die Belegungswahrscheinlichkeit erniedrigen oder erhöhen kann. Fällt die Belegungswahrscheinlichkeit unter einen bestimmten Wert, so ist davon auszugehen, dass die Intervallzelle nun als frei zu kennzeichnen ist. Selbstverständlich kann es bei der Auswertung der Sensordaten auch vorkommen, dass neue durch Intervallzellen beschriebene dynamische Umfeldobjekte hinzukommen und dergleichen. Nachdem dies immer dann, wenn neue Sensordaten vorliegen, wiederholt wird, werden folglich die Sensordaten und die Prädiktionsrechnungen in der Belegungswahrscheinlichkeit akkumuliert. Derartige Prädiktor-Korrektor-Verfahren sind jedoch im Stand der Technik weitgehend bekannt, sodass hierauf nicht näher eingegangen werden soll.

Im Teil B der Fig. 3 ist nun der Zeitpunkt tₖ₊₃ dargestellt, zu dem sich das Kraftfahrzeug 1 mehr als eine Streifenbreite weiterbewegt hat. Dann geschieht im verwendeten Streifenmodell Folgendes, wobei von der Vorstellung ausgegangen wird, dass sich das Kraftfahrzeug 1 letztlich über die Streifen 14 bewegt, die wie eine Art Kette abgerollt werden. Ersichtlich wird zum Zeitpunkt tₖ₊₃ der entgegen der Fahrtrichtung entfernteste Streifen 14a gelöscht. Für ihn wird ein Streifen 14b als neuer entferntester Streifen in Fahrtrichtung hinzugefügt. Die Streifen 14 werden letztlich als stationär angesehen, sodass als weiterer Effekt relativ zum Ego-Kraftfahrzeug 1 alle Streifen, die verbleiben, eine Position entgegen der Fahrtrichtung nach hinten rutschen. So befindet sich der Streifen 14c mit der eine Bake 10 anzeigenden Intervallzelle 16 nun ersichtlich hinter dem Kraftfahrzeug 1.

Bildlich gesprochen kann man sich das Streifenmodell also tatsächlich nach einem Kettenprinzip vorstellen.

Zur weiteren Erläuterung ist im Figurenteil C zum Zeitpunkt tₖ₊₇ ein weiteres Mal gezeigt, wie das Kraftfahrzeug 1 um mehr als eine Streifenbreite zurückgelegt hat.

Dieses Kettenprinzip hat den Vorteil, wie Fig. 3 gut zu entnehmen, dass bezüglich der Fahrbahn 7 unveränderliche Umfeldmerkmale - hier die Punktzellen 20 und 21 sowie die Intervallzellen 15 und 16 - nicht verändert werden müssen, da ihre Relativbewegung zu dem Kraftfahrzeug 1 durch die beschriebene Relativverschiebung zum Kraftfahrzeug bereits kompensiert wird.

## Patentansprüche

1. Verfahren zur Auswertung von die Umgebung eines Kraftfahrzeugs (1) betreffenden Sensordaten wenigstens eines Umfeldsensors (2),
**dadurch gekennzeichnet,**
**dass** zur Beschreibung der Position eines im Rahmen der Auswertung ermittelten Umfeldmerkmals dieses einem von mehreren in Längsrichtung (13) des Kraftfahrzeugs (1) aufeinanderfolgenden Streifen (14) gemeinsam mit wenigstens einer kontinuierlichen Angabe zu seiner Querposition innerhalb des Streifens (14) senkrecht zur Längsrichtung (13) des Kraftfahrzeugs (1) in der Fahrbahnebene zugeordnet wird.

2. Verfahren nach Anspruch 1,
**dadurch gekennzeichnet,**
**dass** alle Streifen (14) eine gleiche Größe aufweisen und/oder die Position der Streifen (14) senkrecht zur Längsrichtung (13) des Kraftfahrzeugs (1) abhängig von einer prädizierten Trajektorie des Kraftfahrzeugs (1), insbesondere von dem zukünftigen Fahrbahnverlaufs, gewählt wird.

3. Verfahren nach Anspruch 1 oder 2,
**dadurch gekennzeichnet,**
**dass** bei einer Fortbewegung des Kraftfahrzeugs (1) um die Ausdehnung eines Streifens (14) der entgegen der Fahrtrichtung entfernteste Streifen (14) aus der Betrachtung entfernt wird und in Fahrtrichtung ein Streifen (14) ergänzt wird.

4. Verfahren nach Anspruch 3,
**dadurch gekennzeichnet,**
**dass** bei Entfernung und Ergänzung eines Streifens (14) alle anderen Streifen (14) relativ zum Kraftfahrzeug (1) um eine Position entgegen der Fahrtrichtung verschoben werden.

5. Verfahren nach einem der vorangehenden Ansprüche,
**dadurch gekennzeichnet,**
**dass** die Umfeldmerkmale durch wenigstens einen Teil der Positionsbeschreibung enthaltende Datencontainer beschrieben werden.

6. Verfahren nach Anspruch 5,
**dadurch gekennzeichnet,**
**dass** die Datencontainer neben der Querposition auch eine Längsposition in Längsrichtung (13) des Kraftfahrzeugs (1) innerhalb des Streifens (14) enthalten, insbesondere als Abweichung von der Streifenmitte.

7. Verfahren nach Anspruch 5 oder 6,
**dadurch gekennzeichnet,**
**dass** wenigstens ein Datencontainer vom Typ Punktzelle (20, 21) verwendet wird, in dem die Querposition einem bestimmten Punkt innerhalb des Streifens (14) entspricht, und/oder wenigstens ein Datencontainer vom Typ Intervallzelle (15, 16, 18, 19) verwendet wird, in dem die Querposition durch eine linke und eine rechte Begrenzung eines Intervalls beschrieben wird.

8. Verfahren nach Anspruch 7,
**dadurch gekennzeichnet,**
**dass** eine eine Belegungswahrscheinlichkeit und/oder eine Belegungsklasse, insbesondere gewählt aus der Gruppe "Belegtraum", "Freiraum", "Unbekanntraum" und "Konfliktraum", und/oder eine Dynamikklasse, insbesondere gewählt aus der Gruppe "stationär" und "dynamisch", umfassende Intervallzelle (15, 16, 18, 19) verwendet wird.

9. Verfahren nach einem der Ansprüche 5 bis 8,
**dadurch gekennzeichnet,**
**dass** die Datencontainer den Positionen zugeordnete, ebenso unter Berücksichtigung der Umfelddaten ermittelte Varianzwerte umfassen, die mögliche Abweichungen beschreiben.

10. Verfahren nach einem der Ansprüche 5 bis 9,
**dadurch gekennzeichnet,**
**dass** die Datencontainer noch wenigstens ein weiteres, das Umfeldmerkmal beschreibendes Datenfeld enthalten, insbesondere die Art des Umfeldmerkmals, eine Klasse des Umfeldmerkmals, die Geschwindigkeit des Umfeldmerkmals und/oder eine erwartete prädizierte Eigenschaft, insbesondere Position, des Umfeldmerkmals.

11. Verfahren nach einem der Ansprüche 5 bis 10,
**dadurch gekennzeichnet,**
**dass** aus den Sensordaten abstrakte Umfeldmerkmale ermittelt werden und/oder die Sensordaten als Einzelmessdaten in den Datencontainern akkumuliert werden.

12. Verfahren nach einem der Ansprüche 5 bis 11,
**dadurch gekennzeichnet,**
**dass** wenigstens ein Prädiktor-Korrektor-Verfahren zur Abschätzung der Position und/oder eines weiteren Datenfelds, insbesondere einer Belegungswahrscheinlichkeit, verwendet wird.

13. Verfahren nach Anspruch 12,
**dadurch gekennzeichnet,**
**dass** zur Abschätzung einer neuen Position eines Umfeldmerkmals nach der Aufnahme neuer Sensordaten zunächst ermittelt wird, wie sich das Objekt aufgrund der bekannten, insbesondere in weiteren Datenfeldern enthaltenen Informationen im Zeitintervall seit der letzten Positionsabschätzung bewegt haben würde, wonach ein Abgleich mit den neuen Sensordaten erfolgt.

14. Verfahren nach einem der vorangehenden Ansprüche,
**dadurch gekennzeichnet,**
**dass** über wenigstens ein Umfeldmerkmal, insbesondere über wenigstens eine Punktzelle (20, 21), eine Trajektorie (12) eines Umfeldobjekts betrachtet wird.

15. Verfahren nach einem der vorangehenden Ansprüche,
**dadurch gekennzeichnet,**
**dass** die Positionsbeschreibung im Steuerbetrieb wenigstens eines Fahrerassistenzsystems genutzt wird und/oder über einen Fahrzeugbus (5), insbesondere einen CAN-Bus oder einen Flexray-Bus, an wenigstens ein Fahrzeugsystem (6), insbesondere wenigstens ein Fahrerassistenzsystem, übermittelt werden.

16. Kraftfahrzeug (1), umfassend eine zur Ermittlung der Eigenbewegung des Kraftfahrzeugs (1) ausgebildete Inertialsensorik (4), wenigstens einen Umfeldsensor (2) und ein zur Auswertung der Sensordaten des Umfeldsensors (2) ausgebildetes Steuergerät (3), welches zur Durchführung des Verfahrens nach einem der vorangehenden Ansprüche ausgebildet ist.

## Claims

1. Method for evaluating sensor data, relating to the surroundings of a motor vehicle (1), of at least one environment sensor (2), **characterised in that**, in order to describe the position of a feature of the surroundings determined during the evaluation, said sensor is assigned to one strip of a plurality of strips (14), which are arranged one after the other in the longitudinal direction (13) of the motor vehicle (1), together with at least one continuous piece of information regarding its transverse position within the strip (14) perpendicular to the longitudinal direction (13) of the motor vehicle (1) in the carriageway plane.

2. Method according to claim 1, **characterised in that** all the strips (14) are the same size and/or the position of the strips (14) is selected to be perpendicular to the longitudinal direction (13) of the motor vehicle (1) depending on a predicted trajectory of the motor vehicle (1), in particular on the future carriageway course.

3. Method according to either claim 1 or claim 2, **characterised in that**, when the motor vehicle (1) travels the distance equivalent to one strip (14), the strip (14) that is the furthest away counter to the direction of travel is eliminated from the consideration and one strip (14) is added in the direction of travel.

4. Method according to claim 3, **characterised in that**, when a strip (14) is removed and added, all the other strips (14) are shifted, relative to the motor vehicle (1), by one position counter to the direction of travel.

5. Method according to any of the preceding claims, **characterised in that** the features of the surroundings are described by at least some of the data containers containing the position description.

6. Method according to claim 5, **characterised in that**, in addition to the transverse position, the data containers also contain a longitudinal position in the longitudinal direction (13) of the motor vehicle (1) within the strip (14), in particular as a deviation from the centre of the strip.

7. Method according to either claim 5 or claim 6, **characterised in that** at least one data container of the dot cell type (20, 21) is used, in which the transverse position corresponds to a particular point within the strip (14), and/or at least one data container of the interval cell type (15, 16, 18, 19) is used, in which the transverse position is described by a left-hand and right-hand limit of an interval.

8. Method according to claim 7, **characterised in that** an interval cell (15, 16, 18, 19) is used which comprises an occupation probability and/or an occupation class, in particular selected from the group of "occupied space", "free space", "unknown space" and " conflict space", and/or a dynamic class, in particular selected from the group of "stationary" and "dynamic".

9. Method according to any of claims 5 to 8, **characterised in that** the data containers comprise variance values which are assigned to the positions, are likewise determined by taking the surroundings data into account, and describe possible deviations.

10. Method according to any of claims 5 to 9, **characterised in that** the data containers also contain at least one further data field describing the feature of the surroundings, in particular the type of the feature of the surroundings, a class of the feature of the surroundings, the speed of the feature of the surroundings and/or an expected predicted property, in particular a position, of the feature of the surroundings.

11. Method according to any of claims 5 to 10, **characterised in that** abstract features of the surroundings are determined from the sensor data and/or the sensor data are accumulated in the data containers as individual pieces of measurement data.

12. Method according to any of claims 5 to 11, **characterised in that** at least one predictor-corrector method is used for assessing the position and/or an additional data field, in particular an occupation probability.

13. Method according to claim 12, **characterised in that**, in order to assess a new position of a feature of the surroundings after new sensor data are picked up, it is first determined, on the basis of the known information, in particular the information contained in additional data fields, how the object would have moved in the time since the last position assessment, after which matching is carried out with the new sensor data.

14. Method according to any of the preceding claims, **characterised in that** a trajectory (12) of an object of the surroundings is considered by means of at least one feature of the surroundings, in particular by means of at least one dot cell (20, 21)

15. Method according to any of the preceding claims, **characterised in that** the position description is used during the control operation of at least one driver assistance system and/or is transmitted to at least one vehicle system (6), in particular at least one driver assistance system, by means of a vehicle bus (5), in particular a CAN bus or a Flexray bus.

16. Motor vehicle (1) comprising an inertial sensor system (4) designed to determine the proper motion of the motor vehicle (1), at least one environment sensor (2) and a control device (3) which is designed to evaluate the sensor data of the environment sensor (2) and is designed to carry out the method according to any of the preceding claims.

## Revendications

1. Procédé d'évaluation de données de capteur, concernant l'environnement d'un véhicule automobile (1), au moins d'un capteur d'ambiance (2),
**caractérisé en ce que**,
lors de la description de la position d'un attribut ambiant déterminée dans le cadre de l'évaluation, cet attribut est affecté à l'une de plusieurs bandes (14) se succédant dans la direction longitudinale (13) du véhicule automobile (1) conjointement avec au moins une indication continue quant à sa position transversale à l'intérieur de la bande (14) perpendiculairement à la direction longitudinale (13) du véhicule automobile (1) dans le plan de la chaussée.

2. Procédé selon la revendication 1,
**caractérisé en ce que** :
toutes les bandes (14) présentent une même grandeur et/ou l'on choisit la position des bandes (14) perpendiculairement à la direction longitudinale (13) du véhicule automobile (1) en fonction d'une trajectoire prédite du véhicule automobile (1), en particulier en fonction du déroulement futur de la chaussée.

3. Procédé selon la revendication 1 ou la revendication 2,
**caractérisé en ce que**,
lors d'un déplacement en avant du véhicule automobile (1) de la largeur d'une bande (14), la bande (14) la plus éloignée à l'encontre du sens de marche est retiré de l'observation et une bande (14) est ajoutée dans le sens de marche.

4. Procédé selon la revendication 3,
**caractérisé en ce que**,
lors du retrait et de l'addition d'une bande (14), toutes les autres bandes (14) sont décalées d'une position par rapport au véhicule automobile (1) à l'encontre du sens de marche.

5. Procédé selon l'une quelconque des revendications précédentes,
**caractérisé en ce que** :
les attributs ambiants sont décrits par au moins une partie des conteneurs de données contenant une description de position.

6. Procédé selon la revendication 5,
**caractérisé en ce que** :
les conteneurs de données contiennent, à côté de la position transversale, également une position longitudinale dans la direction longitudinale (13) du véhicule automobile (1) à l'intérieur de la bande (14), en particulier à l'écart du centre de la bande.

7. Procédé selon la revendication 5 ou la revendication 6,
**caractérisé en ce que** :
l'on utilise au moins un conteneur de données du type à cellule ponctuelle (20, 21), dans lequel la position transversale correspond à un point déterminé à l'intérieur de la bande (14) et/ou on utilise au moins un conteneur de données du type à cellule d'intervalle (15, 16, 18, 19), dans lequel la position transversale est décrite par une limitation gauche et une limitation droite d'un intervalle.

8. Procédé selon la revendication 7,
**caractérisé en ce que** :
l'on utilise une cellule d'intervalle (15, 16, 18, 19) comprenant une probabilité d'occupation et/ou une classe d'occupation, en particulier choisie dans le groupe « espace occupé », « espace libre », « espace inconnu » et « espace de conflit », et/ou une classe dynamique, en particulier choisie dans le groupe « stationnaire » et « dynamique ».

9. Procédé selon l'une quelconque des revendications 5 à 8,
**caractérisé en ce que** :
les conteneurs de données comprennent des valeurs de variance affectées aux positions ainsi que celles obtenues en tenant compte des données ambiantes, lesquelles valeurs décrivent des écarts éventuels.

10. Procédé selon l'une quelconque des revendications 5 à 9,
**caractérisé en ce que** :
les conteneurs de données contiennent encore au moins un autre champ de données décrivant l'attribut ambiant, en particulier le type d'attribut ambiant, une classe de l'attribut ambiant, la vitesse de l'attribut ambiant et/ou une propriété prédite escomptée, en particulier la position, de l'attribut ambiant.

11. Procédé selon l'une quelconque des revendications 5 à 10,
**caractérisé en ce que** :
des attributs ambiants abstraits sont tirés des données de capteur et/ou les données de capteur sont accumulées dans les conteneurs de données sous forme de données de mesure individuelles.

12. Procédé selon l'une quelconque des revendications 5 à 11,
**caractérisé en ce que** :
l'on utilise au moins un procédé de prévision et de correction pour évaluer la position et/ou un autre champ de données, en particulier une probabilité d'occupation.

13. Procédé selon la revendication 12,
**caractérisé en ce que**,
pour évaluer une nouvelle position d'un attribut ambiant après la réception de nouvelles données de capteur, on détermine d'abord comment l' obj et se serait déplacé en raison des informations connues contenues en particulier dans d'autres champs de données, dans l'intervalle de temps depuis la dernière évaluation de position, après quoi il se fait une compensation avec les nouvelles données de capteur.

14. Procédé selon l'une quelconque des revendications précédentes,
**caractérisé en ce que** :
l'on considère une trajectoire (12) d'un objet ambiant sur au moins un attribut ambiant, en particulier sur au moins une cellule ponctuelle (20, 21).

15. Procédé selon l'une quelconque des revendications précédentes,
**caractérisé en ce que** :
la description de position est mise à profit dans le mode de commande au moins d'un système d'assistance au chauffeur et/ou est transmise, via un bus de véhicule (5), en particulier un bus CAN ou un bus Flexray, à au moins un système véhiculaire (6), en particulier au moins un système d'assistance au chauffeur.

16. Véhicule automobile (1), comprenant un système capteur inertiel (4) conformé pour déterminer le mouvement propre du véhicule automobile (1), au moins un capteur d'ambiance (2) et un appareil de commande (3) conçu pour évaluer les données de capteur du capteur d'ambiance (2), lequel appareil de commande est conçu pour réaliser le procédé selon l'une quelconque des revendications précédentes.
